# EUROPÄISCHE PATENTSCHRIFT

(11) **EP 3 395 591 B1**
(45) Veröffentlichungstag und Bekanntmachung des Hinweises auf die Patenterteilung: **01.09.2021**
(21) Anmeldenummer: 18166063.0
(22) Anmeldetag: 06.04.2018
(51) Int. Cl.: B60G 7/00, F16C 7/02

(54) **FAHRWERKBAUTEIL UND VERFAHREN ZU DESSEN HERSTELLUNG**
CHASSIS PART AND METHOD FOR ITS PRODUCTION
ÉLEMENT DE CHÂSSIS DE VÉHICULE ET SON PROCÉDÉ DE FABRICATION

(30) Priorität: 06.04.2017 DE 102017107463
(43) Veröffentlichungstag der Anmeldung: 31.10.2018
(73) Patentinhaber: THK Rhythm Automotive GmbH, 40233 Düsseldorf (DE)
(72) Erfinder: Tillmann, Marius, 40233 Düsseldorf (DE); Walter, Harald, 47179 Duisburg (DE); Nendel, Wolfgang, 09569 Oederan (DE); Meyer, Marcel, 09217 Burgstädt (DE); Iwan, Sebastian, 09125 Chemnitz (DE); Stelzer, Robert, 09112 Chemnitz (DE)
(74) Vertreter: Prinz & Partner mbB

(56) Entgegenhaltungen:
- EP-A1- 2 722 533
- EP-A1- 3 053 761
- EP-A1- 3 112 193
- EP-B1- 2 773 497
- WO-A1-2013/066727
- DE-A1-102008 054 669
- DE-A1-102011 010 367
- DE-A1-102012 111 097
- DE-A1-102013 007 375
- DE-A1-102014 218 601
- FR-A1- 2 862 559
- JP-B2- 3 705 384
- US-A- 367 942
- US-A1- 2005 044 984

## Beschreibung

Die Erfindung betrifft ein Fahrwerkbauteil für ein Kraftfahrzeug, mit einem Lagerungsabschnitt, der zur Anbindung an das Kraftfahrzeug oder angrenzende Fahrwerkskomponenten vorgesehen ist, einer Lageraufnahme für ein Lager, das zur Anbindung an einen Radträger oder das Kraftfahrzeug vorgesehen ist, und einer Strebe, die den Lagerungsabschnitt und die Lageraufnahme miteinander verbindet. Dabei ist die Strebe ein Kunststoff-Verbundbauteil mit einem Strebenkörper und einem Mantel. Zudem weist der Lagerungsabschnitt zwei Metalllaschen auf, die fest und formschlüssig mit der Strebe verbunden sind. Die Erfindung betrifft ferner ein Verfahren zur Herstellung eines Fahrwerkbauteils.

Fahrwerkbauteile sind beispielsweise als Querlenker oder Längslenker bekannt. Sie dienen dazu, einen Radträger mit einem Aufhängungspunkt an der Fahrzeugkarosserie zu verbinden.

Aus verschiedenen Gründen ist es vorteilhaft, wenn die Fahrwerkbauteile möglichst leicht sind. Zum einen trägt ein geringes Gewicht zu einem geringen Fahrzeuggewicht bei. Dies ist sowohl für den Verbrauch des Fahrzeugs als auch die Fahrleistungen vorteilhaft. Zum anderen ist ein geringes Gewicht der Fahrwerkbauteile vorteilhaft für den Fahrkomfort, da die Fahrwerkbauteile zu den sogenannten ungefederten Massen gehören. Je geringer die ungefederten Massen, desto geringer sind die Auswirkungen von Fahrbahnunebenheiten auf den Fahrkomfort.

Es ist bekannt, dass Fahrwerkbauteile als Schmiedeteile beispielsweise aus Aluminiumlegierungen hergestellt werden können. Es gibt auch schon Ansätze, Fahrwerkbauteile aus Kunststoffmaterialien herzustellen.

Aus der US 2005/0044984 A1 ist eine Strebe bekannt, die zwei in entgegengesetzte Enden eines Strebenkörpers eingesetzte Metallgabeln aufweist. Diese werden mittels mehrerer Wicklungen von hochfesten Fasern in axialer Richtung gegen den Strebenkörper gespannt.

Aus der DE 10 2008 054 669 A1 ist eine Achse für ein Kraftfahrzeug bekannt, bei der eine Querblattfeder mit Sturzlenkern verwendet wird.

Die US 367,942 A zeigt eine Verbindungsstrebe mit einer Stange und seitlich an der Stange angebrachten metallischen Federblechen.

In der EP 2 773 497 B1 ist eine Strebe aus Verbundwerkstoff mit den Merkmalen der Oberbegriffe der unabhängigen Ansprüche 1 und 14 offenbart, die zwei Endstücke mit Metalllaschen und einen Mantel aus Verbundmaterial aufweist, mit dem die Endstücke verbunden sind, wobei während der Herstellung der Strebe eine Versteifungselementhalterung verwendet wird, die am Ende des Herstellverfahrens entfernt wird.

Die Aufgabe der Erfindung besteht darin, ein Fahrwerkbauteil zu schaffen, das sich durch ein extrem niedriges Gewicht bei hoher Belastbarkeit auszeichnet. Die Aufgabe der Erfindung besteht ferner darin, ein Verfahren zur Herstellung eines solchen Fahrwerkbauteils zu schaffen.

Zur Lösung dieser Aufgabe ist erfindungsgemäß bei einem Fahrwerkbauteil der eingangs genannten Art vorgesehen, dass die Metalllaschen Öffnungen aufweisen, durch die hindurch sich Material des Strebenkörpers erstreckt.

Weiterhin ist zur Lösung dieser Aufgabe ein Verfahren vorgesehen, das die folgenden Schritte aufweist: Zunächst werden zwei Metalllaschen bereitgestellt, die einen Lagerungsabschnitt des Fahrwerkbauteils darstellen, mit dem dieses mit dem Kraftfahrzeug verbunden werden kann. Dann wird ein Strebenkörper hergestellt und mit den Metalllaschen verbunden, wobei der Strebenkörper eine Lageraufnahme aufweist. Außerdem wird ein Mantel aus einem organoblech-ähnlichen Verband bereitgestellt, der um den Strebenkörper gewickelt wird, sodass er sich auch über die Lageraufnahme erstreckt. Anschließend wird der Mantel verpresst. Das Verfahren ist dadurch gekennzeichnet, dass die Metalllaschen in den Strebenkörper eingespritzt werden.

Die Erfindung beruht auf dem Grundgedanken, durch geschickte Kombination der unterschiedlichen Materialien eine sehr hohe Festigkeit zu erzielen, sodass mit geringem Materialeinsatz gearbeitet werden kann, was zu einem entsprechend geringen Gewicht führt. Der Lagerungsabschnitt besteht aus zwei geometrisch einfachen Metalllaschen, die in ihrer Hauptbelastungsrichtung (Zug und Druck) sehr hohe Kräfte übertragen können. Der Strebenkörper dient zum einen dazu, die Metalllaschen zuverlässig aufzunehmen. Zum anderen dient der Strebenkörper als _{"}Gerüst" für das Organoblech. Der Mantel bildet somit eine Art Hohlkastenprofil, das sich durch eine hohe Steifigkeit und Belastbarkeit auszeichnet. Aufgrund der formschlüssigen Verbindung der Metalllaschen mit der Strebe ergibt sich eine besonders hohe Festigkeit der Verbindung zwischen den Metalllaschen und dem Strebenkörper. Durch die Öffnungen der Metalllaschen und das sich dadurch hindurch erstreckende Material des Strebenkörpers ergibt sich eine Vielzahl von Lasteinleitungspunkten, wodurch Lastspitzen vermieden werden.

Es kann auch vorgesehen sein, dass das Material des Strebenkörpers an den Metalllaschen haftet. Hierdurch ergibt sich eine Art Klebeverbindung, sodass eine besonders große Kraftübertragungsfläche zur Verfügung steht. Abgesehen von der geeigneten Auswahl des Materials für den Strebenkörper wird die Belastbarkeit dieser Klebeverbindung maßgeblich beeinflusst von der Oberflächenrauigkeit der Metalllaschen. Es hat sich als sehr vorteilhaft herausgestellt, dass die aus einer üblichen Oberflächenbehandlung resultierende Rauigkeit, beispielsweise nach einer Zink-Nickel-Behandlung, bereits ausreichend sein kann, dass das Material des Strebenkörpers sich fest mit den Metalllaschen verbindet. Falls nötig, kann auch ein Haftvermittler verwendet werden.

Als Material für die Metalllaschen kann hochfester Stahl verwendet werden. Es ist auch denkbar, die Metalllaschen aus einer Aluminiumlegierung herzustellen.

Der Strebenkörper ist vorzugsweise ein Spritzgussteil, sodass eine hohe Variabilität hinsichtlich seiner Geometrie gegeben ist.

Gemäß einer Ausgestaltung kann der Strebenkörper aus einem Hochtemperatur-Polyamid bestehen. Dieses Material vereinbart eine gute Verarbeitbarkeit mit hoher Festigkeit. Dies gilt insbesondere, wenn der Strebenkörper aus kohlefaserverstärktem PPA besteht.

Gemäß einer alternativen Ausgestaltung besteht der Strebenkörper aus einem Phenolharzcompound. Dieses Material stellt höhere Anforderungen bei der Verarbeitung, zeichnet sich aber durch eine sehr hohe Festigkeit auch bei hohen Temperaturen aus.

Der Mantel weist vorzugsweise hochfeste Endlos-Fasern auf, beispielsweise Glas- oder Aramidfasern und insbesondere Kohlenstofffasern. Hierdurch ergibt sich eine sehr hohe Festigkeit des Mantels.

Der Mantel weist vorzugsweise ein Vlies auf, auf dem die hochfesten Fasern entlang von Lastpfaden drapiert sind. Die hochfesten Fasern werden also auf dem Vlies in einer an die auftretenden Belastungen angepassten Weise angeordnet. Dies stellt einen wichtigen Unterschied dar zu sogenannten Prepregs, bei denen die hochfesten Fasern beispielsweise in der Form eines Gewebes gleichmäßig verteilt sind und aus denen dann die gewünschten Zuschnitte hergestellt werden. Dabei werden notwendigerweise einzelne Fasern unterbrochen, wenn der Zuschnitt eine etwas komplexere Form hat, beispielsweise Einschnürungen. Werden die hochfesten Fasern dagegen in geeigneter Weise auf dem Vlies drapiert, verlaufen sie ohne Unterbrechung über den gesamten Mantel, was zu einer deutlich gesteigerten Festigkeit führt.

Der Mantel ist in einer Ausführungsform vorzugsweise mit einem Epoxidharz imprägniert, sodass er mit geringem Aufwand weiterverarbeitet und ausgehärtet werden kann.

Vorzugsweise erstreckt sich der Mantel entlang einer Seite des Strebenkörpers, um die Lageraufnahme und zurück auf der entgegengesetzten Seite des Strebenkörpers. Dies gewährleistet, dass Zugbelastungen, die auf die Lageraufnahme einwirken, vom Mantel zuverlässig aufgefangen werden.

Die sich entlang der Seiten des Strebenkörpers erstreckenden Teile des Mantels sind dabei vorzugsweise breiter als der sich um die Lageraufnahme erstreckende Teil des Mantels, sodass im Bereich der Seiten des Strebenkörpers genügend Material zur Verfügung steht, damit der Mantel einen geschlossenen Querschnitt bilden kann.

Hierfür ist es insbesondere vorteilhaft, dass einer der beiden sich entlang des Strebenkörpers erstreckenden Teile des Mantels breiter ist als der andere Teil und den schmäleren Teil außen umgreift. Die Seitenränder des breiteren Teils des Mantels wirken ähnlich wie Flügel, die mit dem schmäleren Teil verklebt werden können, sodass eine großflächige Verbindung entlang nahezu der gesamten Länge des Fahrwerkbauteils möglich ist.

Gemäß einer bevorzugten Ausführungsform der Erfindung ist in den Mantel ein Sensor integriert, der Strukturschäden des Fahrwerkbauteils erkennen kann. Der Sensor dient insbesondere dazu, Verformungen des Fahrwerkbauteils zu erfassen, die auf unsachgemäße Belastungen zurückgehen und langfristig zum Versagen führen könnten.

Der Sensor kann insbesondere ein Sticksensor sein, also gebildet durch mehrere dünne Metallfäden, die in das Vlies des Mantels eingestickt sind. Verformungen des Fahrwerkbauteils, die über einen bestimmten Betrag hinausgehen, führen zu einer Dehnung der Metallfasern, woraus eine Änderung des Widerstands der Metallfasern resultiert. Eine solche Änderung des Widerstands kann mit einer sehr einfachen Schaltung, beispielsweise einer Brückenschaltung, detektiert werden. Somit kann frühzeitig signalisiert werden, dass das Fahrwerkbauteil in einer Werkstatt untersucht werden sollte. Wenn stärkere strukturelle Schäden erfasst werden, kann der Fahrer auch aufgefordert werden, das Fahrzeug unverzüglich abzustellen. Denkbar ist auch, dass die Inbetriebnahme des Fahrzeugs, wenn ein stärkerer struktureller Schaden erfasst wurde, präventiv verhindert wird.

Der Strebenkörper kann aus einem thermoplastischen Material spritzgegossen werden, also mit einem Verfahren, das sehr gut beherrscht wird und kostengünstig durchgeführt werden kann.

Es ist auch möglich, dass der Strebenkörper aus einem duroplastischen Material besteht, das unterhalb der Quervernetzungstemperatur spritzgegossen wird. Hierdurch ist das Material besonders gut verarbeitbar. Zum Aushärten wird der Strebenkörper nachträglich ausreichend erwärmt.

Vorzugsweise wird der Mantel mit hochfesten Fasern versehen, die mittels Multiaxialgelegetechnik angeordnet werden. Dies ermöglicht es, die hochfesten Fasern in der gewünschten Weise optimal anzuordnen, sodass eine maximale Belastbarkeit erzielt wird.

Der Mantel kann, bevor er auf den Strebenkörper aufgebracht wird, erwärmt werden. Hierdurch ist der Mantel optimal verformbar, sodass er um den Strebenkörper herumgelegt werden kann und sich optimal an diesen anschmiegt.

Vorzugsweise ist vorgesehen, dass der Strebenkörper, bevor der Mantel aufgebracht wird, erwärmt wird. Dies unterstützt das flächige Verkleben des Mantels mit dem Strebenkörper.

Nachdem der Mantel um den Strebenkörper herumgelegt wurde, wird er mit einer Temperatur zwischen 90°C und 300°C auf den Strebenkörper gepresst. Die Temperatur hängt ab von den jeweils verwendeten Materialien. Durch das Verpressen wird gewährleistet, dass der Mantel mit dem Strebenkörper zu einer unlösbaren Einheit "verbackt".

Die Erfindung wird nachfolgend anhand zweier Ausführungsformen beschrieben, die in den beigefügten Zeichnungen dargestellt sind. In diesen zeigen:
- Figur 1 in einer perspektivischen Ansicht ein erfindungsgemäßes Fahrwerkbauteil;
- die Figuren 2a bis 2d die verschiedenen Komponenten eines Fahrwerkbauteils gemäß einer ersten Ausführungsform;
- die Figuren 3a bis 3d die verschiedenen Komponenten eines Fahrwerkbauteils gemäß einer zweiten Ausführungsform; und
- Figur 4 schematisch die verschiedenen Schritte bei der Herstellung eines erfindungsgemäßen Fahrwerkbauteils.

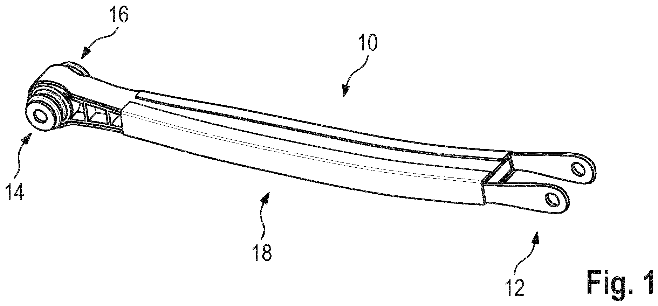

In Figur 1 ist ein Beispiel für ein Fahrwerkbauteil 10 gezeigt. Es handelt sich hier um einen Querlenker. Grundsätzlich können gemäß der Erfindung auch andere Fahrwerkbauteile hergestellt werden, beispielsweise Längslenker.

Der Querlenker 10 weist einen Lagerungsabschnitt 12 auf, der zur Anbindung an der Fahrzeugkarosserie oder eine angrenzende Fahrwerkskomponente vorgesehen ist, eine Lageraufnahme 14, die ein hier schematisch angedeutetes Lager 16 aufnimmt, das zur Anbindung an einen Radträger oder die Fahrzeugkarosserie vorgesehen ist, und eine Strebe 18.

Die Strebe 18 dient dazu, den Lagerungsabschnitt 12 mit der Lageraufnahme 14 mechanisch zu verbinden.

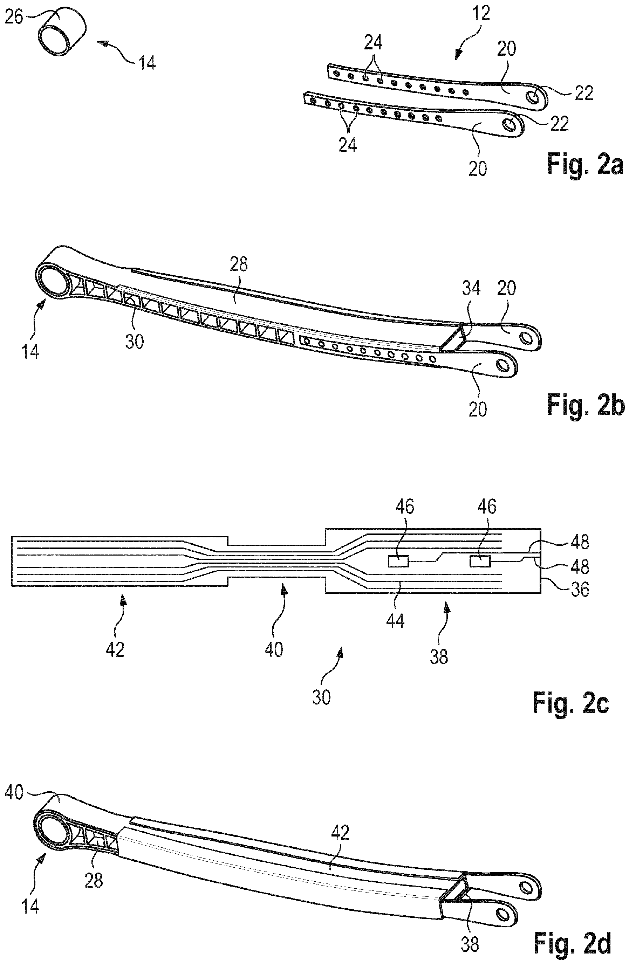

Anhand der Figuren 2a bis 2c wird nachfolgend der Aufbau einer Ausführungsform des Fahrwerkbauteils von Figur 1 erläutert.

Der Lagerungsabschnitt 12 ist hier gebildet durch zwei Metalllaschen 20, die an einem Ende ein Lagerauge 22 aufweisen und, beginnend an der entgegengesetzten Seite, eine Vielzahl von Öffnungen 24, die einen vergleichsweise kleinen Durchmesser haben und sich über einen wesentlichen Teil der Länge der Metalllaschen 20 erstrecken.

Die Lageraufnahme 14 ist hier durch eine Metallhülse 26 symbolisiert. Es kommt im Rahmen der vorliegenden Anmeldung nicht darauf an, wie das Lager konkret mit der Lageraufnahme 14 verbunden wird. Wichtig ist lediglich, dass das Lager, wenn der Querlenker fertig hergestellt ist, mechanisch zuverlässig in der Lageraufnahme aufgenommen ist.

Die Strebe 18 weist einen Strebenkörper 28 sowie einen Mantel 30 auf.

Der Strebenkörper 28 ist ein Spritzgussteil aus einem thermoplastischen Kunststoff.

Auf der Seite der Lageraufnahme 14 ist der Strebenkörper 28 ähnlich wie ein Doppel-T-Träger mit einem Obergurt und einem Untergurt ausgeführt, wobei zusätzliche Querwände 32 vorhanden sind. Auf der Seite des Lagerungsabschnittes 12 ist der Strebenkörper 28 als Hohlkastenprofil ausgeführt. Dementsprechend ist von den Wänden des Strebenkörpers 28 ein Innenraum 34 umschlossen.

Bei der Herstellung des Strebenkörpers 28 werden die Metalllaschen 20 so in die Spritzgussform eingelegt, dass das Material des Strebenkörpers 28 durch die Öffnungen 24 hindurchfließt. Dies gewährleistet, dass die Metalllaschen 20, wenn das Material des Strebenkörpers ausgehärtet ist, formschlüssig am Strebenkörper 28 verankert sind.

Alternativ oder zusätzlich kann zur Verbindung der Metalllaschen 20 mit dem Strebenkörper 28 ausgenutzt werden, dass das Material des Strebenkörpers 28 an den Metalllaschen 20 anhaftet, also an diesem klebt. Hierfür kann in einer vorteilhaften Weise ausgenutzt werden, dass übliche Oberflächenbehandlungen, beispielsweise eine Zink-Nickel-Behandlung, zu einer erhöhten Rauigkeit der Oberfläche der Metalllaschen 20 führt.

Alternativ kann die erhöhte Rauigkeit durch Sandstrahlen oder eine andere Oberflächenbearbeitung erzeugt werden.

Als Material für den Strebenkörper 28 wird vorzugsweise kohlefaserverstärktes PPA verwendet.

In Figur 2c ist der Mantel 30 zu sehen, wobei er in einem etwa um die Hälfte verkleinerten Maßstab relativ zu den Abmessungen der Strebe in Figur 2b dargestellt ist.

Der Mantel 30 ist ein Faser-Kunststoff-Verbund-Halbzeug (FKV-Halbzeug), weist also ein Vlies 36 auf, das hochfeste Fasern trägt, insbesondere Kohlenstofffasern. Diese sind lastpfadgerecht angeordnet und stellen ein Fasergelege dar, das mittels Multiaxialgelegetechnik mit Kettfadenversatz hergestellt werden kann. Ein solches Hybridfaserroving kann mit dem Vlies 36 vernäht werden.

Das FKV-Halbzeug, das später den Mantel 30 bildet, ist im Hinblick darauf, dass er später den Strebenkörper 28 umschließen soll, mit geeigneter Kontur hergestellt. Es ist zu sehen, dass es einen breiten Abschnitt 38, einen schmalen Mittelabschnitt 40 und dann wieder einen breiteren Abschnitt 42 aufweist, wobei die Breite des Abschnittes 38 größer ist als die Breite des Abschnittes 40. Die Abschnitte 38, 42 sind später dafür vorgesehen, den Strebenkörper 28 zu umschließen, während der schmale Abschnitt 40 dafür vorgesehen ist, die Lageraufnahme zu umschließen.

In Figur 2c sind schematisch einige hochfeste Fasern 44 angedeutet, die lastpfadgerecht auf dem Vlies 36 angeordnet sind. Es ist zu sehen, dass die Fasern 44 auf den breiteren Abschnitten 38, 42 großflächig verteilt sind und von dort aus durchgehend über den schmäleren Abschnitt 40 verlaufen, wo sie entsprechend näher beieinander liegen.

Wichtig ist, dass die Fasern 44 durchgehend von einem der breiteren Abschnitte 38, 42 über den schmäleren Abschnitt 40 auf den anderen breiteren Abschnitt 42, 38 verlaufen. Dies stellt einen Unterschied dar zu einem Gelege mit einer Matte aus Kohlenstofffasern, bei der im Bereich des schmalen Abschnittes 40 diejenigen Fasern, die in den breiteren Abschnitten 38, 42 außen liegen, abgeschnitten wären. Auch wäre die "Faserdichte", also die Anzahl der Fasern quer zur Längsrichtung des FKV-Halbzeugs, überall gleich. Dagegen ist beim hier verwendeten Mantel 30 die Faserdichte im schmäleren Abschnitt 40 höher als in den breiteren Abschnitten 38, 42.

Der Mantel 30 ist mit mehreren Sensoren 46 versehen, von denen hier beispielhaft lediglich zwei angedeutet sind. Sie dienen dazu, das fertige Bauteil im Betrieb kontinuierlich zu überwachen.

Bei Fahrwerkbauteilen, die aus Metalllegierungen bestehen, führt eine Überbelastung, aufgrund der Duktilität des Materials, zunächst zu einer plastischen Verformung oder lokalen Schädigung. Dies ist meist unkritisch; bevor sich die Schädigung zu einem strukturellen Problem ausweitet, wird die Schädigung bei einer Inspektion erkannt. Bei Kunststoffbauteilen, insbesondere bei faserverstärkten Bauteilen, kann eine Überbelastung jedoch eine solche lokale Schädigung hervorrufen, dass das Bauteil irgendwann plötzlich versagt, ohne dass das Bauteil vorher bei einer Inspektion als auffällig erkannt wurde. Dies kann verhindert werden, indem geeignete Sensoren in das Bauteil integriert werden.

Die Aufgabe der Sensoren besteht darin, Verformungen der Bauteile zu erfassen, die über diejenigen hinausgehen, die im normalen Betrieb auftreten dürfen.

Die Sensoren sind hier als sogenannte Sticksensoren ausgeführt, bestehen also aus einem Metalldraht (üblicherweise Konstantan), der direkt in das Vlies 36 eingestickt ist. Schematisch sind auch zwei Anschlüsse 48 für die Sensoren 46 angedeutet.

Vom Grundprinzip arbeiten solchen Sensoren ähnlich wie Dehnmessstreifen. Allerdings sind sie vollständig in den Mantel 30 integriert. Es gibt auch keine Einschränkungen bei der Anordnung. Während Dehnmessstreifen an bestimmten Stellen angeordnet werden müssen und von daher lediglich eine punktuelle Überwachung ermöglichen, können Sticksensoren grundsätzlich sehr große Flächen abdecken. Im Extremfall ist denkbar, dass die Sensoren 46 das gesamte Vlies 36 flächig abdecken.

Bei der Herstellung des FKV-Halbzeugs erfolgt ein Vorkonsolidieren und Konfektionieren des FKV-Preforms durch heißes Walzen. Dabei werden drei Lagen zusammengewalzt. Dies kann mit einer Vorschubgeschwindigkeit in der Größenordnung von 6 bis 7 m/min erfolgen, wobei sich die Walzen auf einer Temperatur von etwa 290 °C befinden. Der Walzdruck liegt im Bereich von 1 bis 10 MPa, so dass sich ein organoblech-ähnlicher Verband ergibt

Diese Werte sind vorteilhaft für einen Faser-Kunststoff-Verbund, der für einen thermoplastischen Strebenkörper 28 verwendet wird.

Ist der Faser-Kunststoff-Verbund für einen duroplastischen Strebenkörper vorgesehen, wird zusätzlich der Lagenaufbau imprägniert. Außerdem befinden sich die Walzen auf einer Temperatur von lediglich etwa 60°C bis 90 °C.

In Figur 2d ist der Mantel 30 angebracht am Strebenkörper 28 zu sehen. Der Abschnitt 42 des Mantels 30 erstreckt sich hier auf der Oberseite des Strebenkörpers 28, während der Abschnitt 38 sich auf der Unterseite befindet. Der schmale Abschnitt 40 umschließt die Lageraufnahme 14 auf der Außenseite und erstreckt sich somit von einer Seitenfläche um die Lageraufnahme 14 herum auf die andere Seitenfläche.

Da der Abschnitt 38 breiter ausgeführt ist als der Abschnitt 42 des Mantels 30, können die außen liegenden Seitenränder "umgefaltet" werden, sodass sie auf dem schmäleren Abschnitt 42 aufliegen.

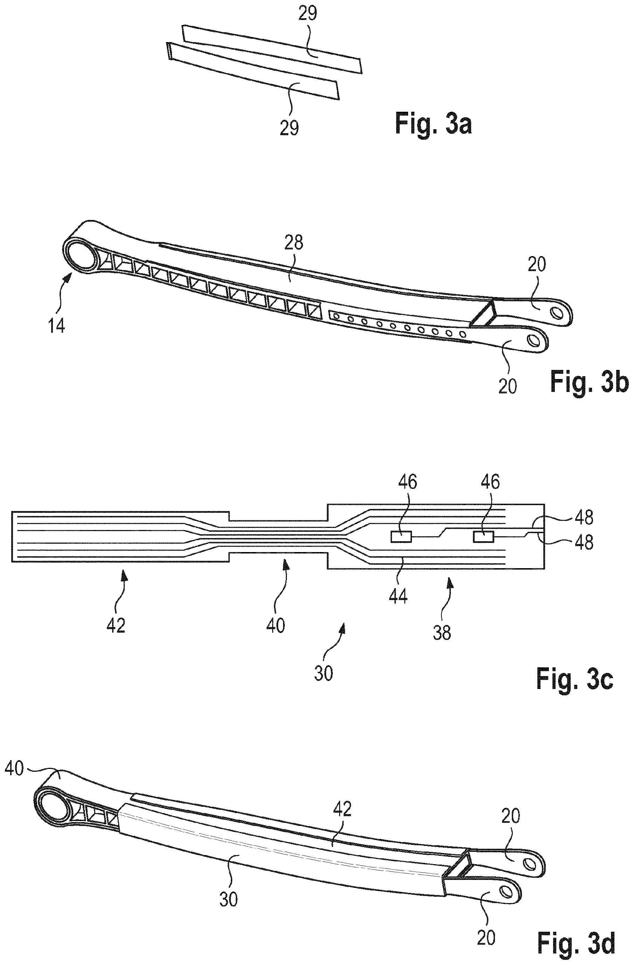

In den Figuren 3a bis 3d ist eine zweite Ausführungsform gezeigt. Für die von der vorhergehenden Ausführungsform bekannten Bauteile und Elemente werden dieselben Bezugszeichen verwendet, und es wird insofern auf die obigen Erläuterungen verwiesen.

Der Unterschied zwischen der ersten und der zweiten Ausführungsform besteht insbesondere im Material, das für den Strebenkörper 28 verwendet wird. Der Strebenkörper 28 besteht bei der zweiten Ausführungsform nämlich aus einem Duroplast, insbesondere einem Phenolharzcompound.

Es kann außerdem vorgesehen sein, dass der Strebenkörper 28 mehrteilig ausgeführt ist, nämlich aus dem eigentlichen Strebenkörper 28 und zusätzlich zwei kleinen Deckeln 29, die in Verlängerung der Metalllaschen 20 seitlich angesetzt und dort mit dem Strebenkörper 28 später verklebt oder verbacken werden. Dies führt zu einer höheren Festigkeit des Strebenkörpers 28.

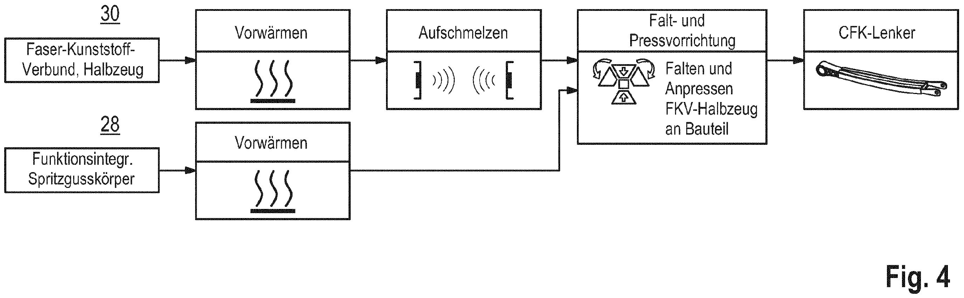

Anhand von Figur 4 wird nachfolgend die Herstellung des in den Figuren 1 bis 3 gezeigten Fahrwerkbauteils erläutert.

Der Strebenkörper 28 wird, wenn er aus thermoplastischem Material besteht, mit einer Temperatur der Schmelze in der Größenordnung von 300°C bis 350°C gespritzt. Die Werkzeugtemperatur liegt dabei in der Größenordnung von 140°C bis 160°C.

Um den Mantel 30 mit dem Strebenkörper 28 zu verbinden, werden zunächst sowohl der Strebenkörper 28 als auch der Mantel 30 vorgewärmt.

Der Strebenkörper 28 wird auf eine Temperatur in der Größenordnung von 160°C bis 250°C vorgewärmt. Dies kann mittels Heißluft erfolgen. Alternativ kann auch Infrarotstrahlung verwendet werden.

Das FKV-Halbzeug (also der spätere Mantel 30) wird auf eine Temperatur unterhalb der Schmelztemperatur vorgewärmt werden, z.B. auf rund 270°C. Dies kann über eine Kontaktheizung erfolgen. Denkbar ist auch, hierfür Heißluft zu verwenden.

Anschließend wird das FKV-Halbzeug auf eine Temperatur unterhalb der thermischen Degradation aufgeschmolzen, z.B. auf 350°C. Dies kann mittels Infrarotstrahlung erfolgen.

Bei dieser Temperatur ist der Mantel 30 (also das FKV-Halbzeug) sehr gut verformbar, ähnlich einem nassen Handtuch.

Nach dem Aufschmelzen wird das FKV-Halbzeug geeignet so um den Strebenkörper 28 gelegt, dass sich die Abschnitte 38, 42 über die Seitenflächen des Strebenkörpers 28 erstrecken und der Abschnitt 40 die Lageraufnahme 14 umschlingt. Dann wird der Mantel 30 fest gegen den Strebenkörper 28 gepresst, wobei auch die einander überlappenden Bereiche der Abschnitte 38, 42 gegeneinander gedrückt werden.

Dabei wird das flüssige PPA des FKV-Halbzeugs mit der erwärmten Oberfläche des Strebenkörpers 28 in einem verpresst, sodass eine lasttragende Haftverbindung zwischen dem Mantel 30 und dem Strebenkörper 28 entsteht. Außerdem verkleben die einander überlappenden Abschnitte des Mantels 30 fest miteinander.

Zum Verpressen des Mantels 30 mit dem Strebenkörper 28 kann eine 100-Tonnen-Presse mit Faltschieber verwendet werden. Die Werkzeugtemperatur beim Verpressen liegt in der Größenordnung von 250°C, wobei im Prozessraum Temperaturen oberhalb von 300°C vorliegen.

Wenn der Strebenkörper 28 aus duroplastischem Material besteht, liegt die Temperatur der Schmelze beim Spritzen in der Größenordnung von 80°C bis 90°C.

Auch beim duroplastischen Strebenkörper 28 werden zum Verbinden des Mantels 30 mit dem Strebenkörper 28 beide Bauteile zunächst vorgewärmt.

Der Strebenkörper 28 wird auf eine Temperatur in der Größenordnung von 80°C bis 160°C vorgewärmt.

Das FKV-Halbzeug (also der spätere Mantel 30) wird zunächst auf eine Temperatur im Bereich von 80°C bis 90°C vorgewärmt und anschließend, kurz bevor es um den Strebenkörper 28 gefaltet wird, auf eine Temperatur in der Größenordnung von 100°C aufgewärmt.

Nach dem Aufwärmen wird das FKV-Halbzeug in der gleichen Weise wie beim thermoplastischen Strebenkörper 28 um diesen gelegt. Dann wird der Mantel 30 fest gegen den Strebenkörper 28 gepresst, wobei auch die einander überlappenden Bereiche der Abschnitte 38, 42 gegeneinander gedrückt werden.

Die Temperatur von Faltwerkzeug und Presse liegt dabei im Bereich von 150°C bis 170°C, damit das Material des Strebenkörpers 28 aushärtet.

Die Sensoren 46 sind vorzugsweise auf der Seite des Vlieses 36 angeordnet, die dem Strebenkörper 28 zugewandt ist. Die Sensoren 46 sind also geschützt im Inneren des Bauteils angeordnet.

## Patentansprüche

1. Fahrwerkbauteil (10) für ein Kraftfahrzeug, insbesondere Querlenker, mit einem Lagerungsabschnitt (12), der zur Anbindung an das Kraftfahrzeug vorgesehen ist, einer Lageraufnahme (14) für ein Lager, das zur Anbindung an einen Radträger vorgesehen ist, und einer Strebe (18), die den Lagerungsabschnitt (12) und die Lageraufnahme (14) miteinander verbindet, wobei die Strebe (18) ein Kunststoff-Verbundbauteil mit einem Strebenkörper (28) und einem Mantel (30) ist und der Lagerungsabschnitt (12) zwei Metalllaschen (20) aufweist, die fest mit der Strebe (18) verbunden sind, wobei die Metalllaschen (20) formschlüssig mit der Strebe (18) verbunden sind, **dadurch gekennzeichnet, dass** die Metalllaschen (20) Öffnungen aufweisen, durch die hindurch sich Material des Strebenkörpers (28) erstreckt.

2. Fahrwerkbauteil nach Anspruch 1, **dadurch gekennzeichnet, dass** das Material des Strebenkörpers (28) an den Metalllaschen (20) haftet.

3. Fahrwerkbauteil Anspruch 1 oder 2, **dadurch gekennzeichnet, dass** der Strebenkörper (28) ein Spritzgussteil ist.

4. Fahrwerkbauteil nach einem der vorhergehenden Ansprüche, **dadurch gekennzeichnet, dass** der Strebenkörper (28) aus einem Hochtemperatur-Polyamid (PPA) besteht, insbesondere aus einem kohlefaserverstärkten PPA.

5. Fahrwerkbauteil nach einem der Ansprüche 1 bis 3, **dadurch gekennzeichnet, dass** der Strebenkörper (28) aus einem Phenolharzcompound besteht.

6. Fahrwerkbauteil nach einem der vorhergehenden Ansprüche, **dadurch gekennzeichnet, dass** der Mantel (30) hochfeste Fasern (44) aufweist, insbesondere Kohlenstofffasern.

7. Fahrwerkbauteil nach Anspruch 6, **dadurch gekennzeichnet, dass** der Mantel (30) ein Vlies (36) aufweist und die hochfesten Fasern (44) entlang von Lastpfaden auf dem Vlies (36) drapiert sind.

8. Fahrwerkbauteil nach einem der vorhergehenden Ansprüche, **dadurch gekennzeichnet, dass** der Mantel (30) mit Epoxidharz imprägniert ist.

9. Fahrwerkbauteil nach einem der vorhergehenden Ansprüche, **dadurch gekennzeichnet, dass** der Mantel (30) sich entlang einer Seite des Strebenkörpers (28), um die Lageraufnahme (14) und zurück auf der entgegengesetzten Seite des Streben körpers (28) erstreckt.

10. Fahrwerkbauteil nach Anspruch 9, **dadurch gekennzeichnet, dass** der sich um die Lageraufnahme (14) erstreckende Abschnitt (40) des Mantels (30) schmäler ist als die sich entlang der Seiten des Strebenkörpers erstreckenden Abschnitte (38, 42).

11. Fahrwerkbauteil nach einem der Ansprüche 9 und 10, **dadurch gekennzeichnet, dass** einer der beiden sich entlang des Strebenkörpers (28) erstreckenden Teile des Mantels breiter ist als der andere Teil und den schmäleren Teil außen umgreift.

12. Fahrwerkbauteil nach einem der vorhergehenden Ansprüche, **dadurch gekennzeichnet, dass** in den Mantel (30) ein Sensor (46) integriert ist, der Strukturschäden des Fahrwerkbauteils (10) erkennen kann.

13. Fahrwerkbauteil nach Anspruch 12, **dadurch gekennzeichnet, dass** der Sensor ein Sticksensor (46) ist.

14. Verfahren zur Herstellung eines Fahrwerkbauteils für ein Kraftfahrzeug, insbesondere nach einem der vorhergehenden Ansprüche, mittels der folgenden Schritte:
- es werden zwei Metalllaschen (20) bereitgestellt, die einen Lagerungsabschnitt (12) des Fahrwerkbauteils (10) darstellen, mit dem dieses mit dem Kraftfahrzeug verbunden werden kann;
- es wird ein Strebenkörper (28) hergestellt und mit den Metalllaschen (20) verbunden, wobei der Strebenkörper (28) eine Lageraufnahme (14) aufweist;
- es wird ein Mantel (30) aus einem organoblech-ähnlichen Verband bereitgestellt, der um den Strebenkörper (28) gewickelt wird, so dass er sich auch über die Lageraufnahme (14) erstreckt;
- der Mantel (30) wird verpresst,
**dadurch gekennzeichnet, dass** die Metalllaschen (20) in den Strebenkörper (28) eingespritzt werden.

15. Verfahren nach Anspruch 14, **dadurch gekennzeichnet, dass** der Strebenkörper (28) spritzgegossen wird.

16. Verfahren nach Anspruch 14 oder Anspruch 15, **dadurch gekennzeichnet, dass** der Strebenkörper (28) aus einem thermoplastischen Material spritzgegossen wird.

17. Verfahren nach Anspruch 14 oder Anspruch 15, **dadurch gekennzeichnet, dass** der Strebenkörper (28) aus einem duroplastischen Material besteht, das unterhalb der Quervernetzungstemperatur spritzgegossen wird.

18. Verfahren nach einem der Ansprüche 14 bis 17, **dadurch gekennzeichnet, dass** der Mantel (30) mit hochfesten Fasern (44) versehen wird, die mittels Multiaxialgelegetechnik angeordnet werden.

19. Verfahren nach einem der Ansprüche 14 bis 18, **dadurch gekennzeichnet, dass** der Mantel (30), bevor er auf den Strebenkörper (28) aufgebracht wird, heißgewalzt wird.

20. Verfahren nach einem der Ansprüche 14 bis 19, **dadurch gekennzeichnet, dass** der Strebenkörper (28), bevor der Mantel (30) aufgebracht wird, erwärmt wird.

21. Verfahren nach einem der Ansprüche 14 bis 20, **dadurch gekennzeichnet, dass** der Mantel (30) mit einer Temperatur zwischen 90°C und 300°C auf den Strebenkörper (28) gepresst wird.

## Claims

1. A chassis component (10) for a motor vehicle, in particular a transverse control arm, comprising a mounting section (12) which is provided for connection to the motor vehicle, a bearing seat (14) for a bearing which is provided for connection to a wheel carrier, and a strut (18) which connects the mounting section (12) and the bearing seat (14) to one another, the strut (18) being a plastic composite component having a strut body (28) and a jacket (30), and the mounting section (12) including two metal tabs (20) which are firmly connected to the strut (18), the metal tabs (20) being connected to the strut (18) with an interlocking fit, **characterized in that** the metal tabs (20) have openings through which material of the strut body (28) extends.

2. The chassis component according to claim 1, **characterized in that** the material of the strut body (28) adheres to the metal tabs (20).

3. The chassis component according to claim 1 or 2, **characterized in that** the strut body (28) is an injection-molded part.

4. The chassis component according to any of the preceding claims, **characterized in that** the strut body (28) consists of a high-temperature polyamide (PPA), in particular a carbon fiber reinforced PPA.

5. The chassis component according to any of claims 1 to 3, **characterized in that** the strut body (28) consists of a phenolic resin compound.

6. The chassis component according to any of the preceding claims, **characterized in that** the jacket (30) includes high-strength fibers (44), in particular carbon fibers.

7. The chassis component according to claim 6, **characterized in that** the jacket (30) includes a nonwoven (36) and the high-strength fibers (44) are draped on the nonwoven (36) along load paths.

8. The chassis component according to any of the preceding claims, **characterized in that** the jacket (30) is impregnated with epoxy resin.

9. The chassis component according to any of the preceding claims, **characterized in that** the jacket (30) extends along one side of the strut body (28), around the bearing seat (14) and back on the opposite side of the strut body (28).

10. The chassis component according to claim 9, **characterized in that** the section (40) of the jacket (30) that extends around the bearing seat (14) is narrower than the sections (38, 42) that extend along the sides of the strut body.

11. The chassis component according to either of claims 9 and 10, **characterized in that** one of the two parts of the jacket extending along the strut body (28) is wider than the other part and engages around the narrower part on the outside.

12. The chassis component according to any of the preceding claims, **characterized in that** the jacket (30) has a sensor (46) integrated therein which can detect structural damage to the chassis component (10).

13. The chassis component according to claim 12, **characterized in that** the sensor is an embroidered sensor (46).

14. A method of manufacturing a chassis component for a motor vehicle, in particular according to any of the preceding claims, by means of the following steps:
- providing two metal tabs (20) which constitute a mounting section (12) of the chassis component (10), by means of which the latter can be connected to the motor vehicle;
- producing a strut body (28) and connecting it to the metal tabs (20), the strut body (28) including a bearing seat (14);
- providing a jacket (30) made of an organosheet-like bond that is wrapped around the strut body (28) so that it also extends over the bearing seat (14);
- grouting the jacket (30),
**characterized in that** the metal tabs (20) are injected into the strut body (28).

15. The method according to claim 14, **characterized in that** the strut body (28) is injection molded.

16. The method according to claim 14 or claim 15, **characterized in that** the strut body (28) is injection molded from a thermoplastic material.

17. The method according to claim 14 or claim 15, **characterized in that** the strut body (28) consists of a thermosetting material, which is injection molded below the crosslinking temperature.

18. The method according to any of claims 14 to 17, **characterized in that** the jacket (30) is provided with high-strength fibers (44) that are arranged by means of multiaxial non-crimp fabric technology.

19. The method according to any of claims 14 to 18, **characterized in that** the jacket (30) is hot-rolled before it is applied to the strut body (28).

20. The method according to any of claims 14 to 19, **characterized in that** the strut body (28) is heated before the jacket (30) is applied.

21. The method according to any of claims 14 to 20, **characterized in that** the jacket (30) is pressed onto the strut body (28) at a temperature between 90°C and 300°C.

## Revendications

1. Composant de châssis (10) pour un véhicule automobile, en particulier bras oscillant transversal, présentant un tronçon de support (12) prévu pour le raccordement au véhicule automobile, un logement de palier (14) pour un palier prévu pour le raccordement à un arbre de roue, et une entretoise (18) reliant le tronçon de support (12) et le logement de palier (14) l'un à l'autre, l'entretoise (18) étant un composant composite en matière plastique présentant un corps d'entretoise (28) et une enveloppe (30), et le tronçon de support (12) présentant deux pattes métalliques (20) qui sont solidaires de l'entretoise (18), les pattes métalliques (20) étant reliées à l'entretoise (18) par coopération de formes, **caractérisé en ce que** les pattes métalliques (20) présentent des orifices à travers lesquelles s'étend de la matière du corps d'entretoise (28).

2. Composant de châssis selon la revendication 1, **caractérisé en ce que** la matière du corps d'entretoise (28) adhère aux pattes métalliques (20).

3. Composant de châssis selon la revendication 1 ou 2, **caractérisé en ce que** le corps d'entretoise (28) est une pièce moulée par injection.

4. Composant de châssis selon l'une des revendications précédentes, **caractérisé en ce que** le corps d'entretoise (28) est réalisé en polyamide haute température (PPA), en particulier en un PPA renforcé de fibres de carbone.

5. Composant de châssis selon l'une des revendications 1 à 3, **caractérisé en ce que** le corps d'entretoise (28) est réalisé en un compound de résine phénolique.

6. Composant de châssis selon l'une des revendications précédentes, **caractérisé en ce que** l'enveloppe (30) présente des fibres (44) à résistance élevée, en particulier des fibres de carbone.

7. Composant de châssis selon la revendication 6, **caractérisé en ce que** l'enveloppe (30) présente un non-tissé (36) et **en ce que** les fibres (44) à résistance élevée sont drapées le long de trajets de charge sur le non-tissé (36).

8. Composant de châssis selon l'une des revendications précédentes, **caractérisé en ce que** l'enveloppe (30) est imprégnée de résine époxyde.

9. Composant de châssis selon l'une des revendications précédentes, **caractérisé en ce que** l'enveloppe (30) s'étend le long d'un côté du corps d'entretoise (28), autour du logement de palier (14) et en retour du côté opposé du corps d'entretoise (28).

10. Composant de châssis selon la revendication 9, **caractérisé en ce que** le tronçon (40) de l'enveloppe (30) s'étendant autour du logement de palier (14) est plus étroit que les tronçons (38, 42) qui s'étendent le long des côtés du corps d'entretoise.

11. Composant de châssis selon l'une des revendications 9 et 10, **caractérisé en ce que** l'une des deux parties de l'enveloppe qui s'étendent le long du corps d'entretoise (28) est plus large que l'autre partie et s'engage à l'extérieur autour de la partie plus étroite.

12. Composant de châssis selon l'une des revendications précédentes, **caractérisé en ce qu'**un capteur (46) apte à reconnaître des dégâts structurels du composant de châssis (10) est intégré dans l'enveloppe (30).

13. Composant de châssis selon la revendication 12, **caractérisé en ce que** le capteur est un capteur à broder (46).

14. Procédé de fabrication d'un composant de châssis pour un véhicule automobile, en particulier selon l'une des revendications précédentes, par les étapes suivantes :
- deux pattes métalliques (20) sont fournies, lesquelles représentent un tronçon de support (12) du composant de châssis (10), au moyen duquel celui-ci peut être relié au véhicule automobile;
- un corps d'entretoise (28) est fabriqué et relié aux pattes métalliques (20), le corps d'entretoise (28) présentant un logement de palier (14);
- une enveloppe (30) en un assemblage similaire à une tôle organique enroulé autour du corps d'entretoise (28) de manière à s'étendre aussi sur le logement de palier (14) est fournie ;
- l'enveloppe (30) est comprimée,
**caractérisé en ce que** les pattes métalliques (20) sont injectées dans le corps d'entretoise (28).

15. Procédé selon la revendication 14, **caractérisé en ce que** le corps d'entretoise (28) est moulé par injection.

16. Procédé selon la revendication 14 ou la revendication 15, **caractérisé en ce que** le corps d'entretoise (28) est moulé par injection à partir d'une matière thermoplastique.

17. Procédé selon la revendication 14 ou la revendication 15, **caractérisé en ce que** le corps d'entretoise (28) est réalisé en une matière thermodurcissable qui est moulée par injection en dessous de la température de réticulation transversale.

18. Procédé selon l'une des revendications 14 à 17, **caractérisé en ce que** l'enveloppe (30) est pourvue de fibres (44) à résistance élevée qui sont agencées par une technique de tissu multiaxial.

19. Procédé selon l'une des revendications 14 à 18, **caractérisé en ce que** l'enveloppe (30) est laminée à chaud avant d'être appliquée sur le corps d'entretoise (28).

20. Procédé selon l'une des revendications 14 à 19, **caractérisé en ce que** le corps d'entretoise (28) est chauffé avant l'application de l'enveloppe (30).

21. Procédé selon l'une des revendications 14 à 20, **caractérisé en ce que** l'enveloppe (30) est pressée sur le corps d'entretoise (28) avec une température comprise entre 90°C et 300°C.
